# EUROPEAN PATENT SPECIFICATION

(11) **EP 1 399 777 B1**
(45) Date of publication and mention of the grant of the patent: **29.08.2007**
(21) Application number: 02741253.5
(22) Date of filing: 24.06.2002
(51) Int. Cl.: G02F 1/1347

(54) **DISPLAY PANEL AND DISPLAYING APPARATUS HAVING THE PANEL**
ANZEIGETAFEL UND DIESE VERWENDENDE ANZEIGEVORRICHTUNG
PANNEAU D'AFFICHAGE ET DISPOSITIF LE COMPRENANT

(30) Priority: 28.06.2001 JP 2001196407
(43) Date of publication of application: 24.03.2004
(73) Proprietor: MINOLTA CO., LTD., Osaka-Shi, Osaka 541-8556 (JP)
(72) Inventor: SHIMIZU, Yoshie, Minolta Co., Ltd., Osaka-shi, Osaka 541-8556 (JP); OSHITANI, Hiroshi, Minolta Co., Ltd., Osaka-shi, Osaka 541-8556 (JP); FUJIYO, Ichiro, Minolta Co., Ltd., Osaka-shi, Osaka 541-8556 (JP)
(74) Representative: HOFFMANN EITLE
(86) International application number: PCT/JP2002/006265
(87) International publication number: WO 2003/003109

(56) References cited:
- PATENT ABSTRACTS OF JAPAN vol. 015, no. 226 (P-1213), 10 June 1991 (1991-06-10) -& JP 03 067222 A (HONDA MOTOR CO LTD), 22 March 1991 (1991-03-22)
- PATENT ABSTRACTS OF JAPAN vol. 1998, no. 14, 31 December 1998 (1998-12-31) -& JP 10 239700 A (TOSHIBA CORP), 11 September 1998 (1998-09-11)
- PATENT ABSTRACTS OF JAPAN vol. 1998, no. 08, 30 June 1998 (1998-06-30) -& JP 10 068967 A (FUJI XEROX CO LTD), 10 March 1998 (1998-03-10)

## Description

### TECHNICAL FIELD

The present invention relates to a displaying apparatus that incorporates a display panel such as liquid crystal display panel and a flat optical element such as touch panel or light-conducting plate.

JP-A-03067222 discloses in combination the technical features of the pre-characterizing part of claim 1 below.

### BACKGROUND OF THE INVENTION

Conventionally, there have been known portable devices including a liquid crystal display (LCD) such as PDA (personal data assistant).

A light-conducting plate is opposed to a major surface of the LCD for guiding light from a light source such as fluorescent tube toward the LCD to illuminate the LCD uniformly.

The light-conducting plate has one peripheral surface through which light from the light source enters the plate and a light-exit or major surface opposed to the LCD through which light exits toward the LCD.

The LCDs are available in transmissive and reflective versions.

The transmissive LCD holds the light-conducting plate behind the LCD so that it is illuminated from the rear side of the LCD. This type of lighting system is referred to as a "back-lighting unit".

LCD power consumption is a major concern in portable devices which run on batteries. However, the back-lighting unit of the transmissive LCD consumes a significant amount of power, which is undesirable for use with portable devices.

The reflective LCD holds the light-conducting plate in front of the LCD so that it is illuminated from the front side of the LCD. The reflective LCD displays typically by ambient light. However, when ambient light is insufficient, light is emitted as auxiliary illumination from the light source, transmitted through the light-conducting plate and then projected toward the LCD. This type of lighting-system is referred as a "front-lighting unit". This type of lighting is advantageous in that the reflective LCD consumes considerably less power than the transmissive LCD.

Such portable devices including a front-lighting unit are often equipped with a touch panel in front of the light-conducting plate.

The light-conducting plate preferably has a plurality of multifaceted microstructures disposed periodically along its front surface so that light emitted from the light source is reflected with high efficiency by the front surface to travel toward the LCD. Also, in some of the touch panels, electrodes and/or spacers are disposed periodically. As a result, where a flat optical element such as light-conducting plate or touch panel having periodical structures are positioned on the LCD in which electrodes are periodically formed, "moiré patterns" may be produced, resulting in a lower visibility of the LCD.

JP-A-10239700 discloses a liquid crystal display device with layered LCD cells. Each of the LCD cells include guest host LCDs having different colors, between an opposing substrate and each of the TFT matrix substrates. A second matrix arranging region is displaced from a first matrix arranging region in a direction parallel to the extension of the substrate, and a third matrix arranging region is displaced from the second matrix arranging region in a direction perpendicular to the extension of the substrate. Each substrate is displaced from the other only by one pixel in order that the substrates are positioned easily even if the alignment mark is provided at the same position of each substrate.

JP-A-10068967 discloses a display device in which an upper layer and a lower layer are superimposed. The upper layer has sub-pixels of a guest host liquid crystal emitting red R and a guest host liquid crystal emitting blue B. The lower layer has sub-pixels of a guest host liquid crystal emitting green G. The pixels of R and B are arranged without overlapping, but G and R/B are overlapped, thereby avoiding a brightness reduction which may occur when RGB are arranged in a mosaic pattern, and a generation of parallax which may occur when RGB are layered. A transparent electrode in the lower layer is divided corresponding to the sub-pixels of the upper layer and each divided region is switched independently.

### SUMMARY OF THE INVENTION

Aspects of the present invention are defined in claim 1 below. The dependent claims are directed to optional and preferred features.

Therefore, the object of the present invention is to provide a display panel such as LCD panel that restrains moiré patterns from being produced when it is used with a flat optical element such as touch panel or light-conducting plate.

Another object of the present invention is to provide a displaying device having said display panel that provides a high display quality.

To achieve the above object, a display panel includes first and second display sub-panels superimposed on each other. Each pixel of the display panel is constituted by a first sub-pixel of the first display sub-panel and a second sub-pixel of the second display sub-panel. The first and second display sub-panels are superimposed on each other so that the first and second sub-pixels constituting each pixel of the display panel are displaced at a distance in relation to each other in a surface direction of the display sub-panel.

Herein, the "display sub-panel" represents each panel constituting the display panel. The "sub-pixel" represents a section of each display sub-panel constituting a pixel of the display panel.

The first and second sub-pixels constituting each pixel of the display panel are displaced in relation to each other so that they overlap with each other when viewed in the direction perpendicular to said surface direction; and the pattern of the first sub-pixels and the pattern of the second sub-pixels are identical.

A displaying device may include a display panel having a major surface, which includes first and second display sub-panels superimposed on each other. Each pixel of the display panel is constituted by a first sub-pixel of the first display sub-panel and a second sub-pixel of the second display sub-panel. The displaying device may also include a flat optical element opposed to said major surface of the display panel. The first and second display sub-panels are superimposed on each other so that the first and second sub-pixels constituting each pixel of the display panel are displaced at a distance in relation to each other in a surface direction of the display sub-panel.

The flat optical element may be a touch panel or light-conducting plate.

### BRIEF DESCRIPTION OF THE DRAWINGS

Fig. 1 is a perspective view of a first embodiment of the displaying device according to the present invention;
Fig. 2 is an enlarged partial cross-sectional view showing in detail each display sub-panel that constitutes the LCD.panel of Fig. 1;
Fig. 3A is an enlarged partial cross-sectional view showing in detail a touch panel;
Fig. 3B is an enlarged partial cross-sectional view of the touch panel of Fig. 3A when it is applied with an external force;
Fig. 4A is a schematic plan view of a blue display sub-panel in the first embodiment having a sub-pixel pattern;
Fig. 4B is a schematic plan view of a green display sub-panel in the first embodiment having a sub-pixel pattern;
Fig. 4C is a schematic plan view of a red display sub-panel in the first embodiment having a sub-pixel pattern;
Fig. 4D is a schematic diagram showing an overlap of the sub-pixel patterns when the three display sub-panels of Figs. 4A-4C are superimposed on one another so that they are displaced in relation to one another in the surface direction;
Fig. 5 is a perspective view of a second embodiment of the displaying device according to the present invention;
Fig. 6A is a schematic plan view of a blue display sub-panel in the second embodiment having a sub-pixel pattern;
Fig. 6B is a schematic plan view of a green display sub-panel in the second embodiment having a sub-pixel pattern;
Fig. 6C is a schematic diagram showing an overlap of the sub-pixel patterns when the two display sub-panels of Figs. 6A and 6B are superimposed on each other so that they are displaced in relation to each other in the surface direction;
Fig. 7 is a perspective view of a third embodiment of the displaying device according to the present invention;
Fig. 8A is an enlarged partial cross-sectional view showing in detail a display sub-panel that constitutes the LCD panel of Fig. 7;
Fig. 8B is an enlarged partial cross-sectional view of the display sub-panel of Fig. 8A when a voltage is applied to the display sub-panel;
Fig. 9A is a schematic plan view of a cyan display sub-panel in the third embodiment having a sub-pixel pattern, not forming part of the invention as claimed;
Fig. 9B is a schematic plan view of a magenta display sub-panel in the third embodiment having a sub-pixel pattern; not forming part of the invention as claimed;
Fig. 9C is a schematic plan view of a yellow display sub-panel in the third embodiment having a sub-pixel pattern; not forming part of the invention as claimed;
Fig. 9D is a schematic diagram showing an overlap of the sub-pixel patterns when the three display sub-panels of Figs. 9A-9C are superimposed on one another so that they are displaced in relation to one another in the surface direction, not forming part of the invention as claimed;
Fig. 10A is a plan view of one substrate on which a plurality of electrodes that form a sub-pixel pattern of the magenta display sub-panel shown in Fig. 9B;
Fig. 10B is a plan view of the other substrate on which a plurality of electrodes that form a sub-pixel pattern of the magenta display sub-panel shown in Fig. 9B;
Fig. 10C. is a schematic diagram showing the relationship between the electrodes and pixel pattern when the substrates of Figs. 10A and 10B are superimposed on each other; and
Fig. 11 is a schematic diagram of the fourth embodiment of the present invention, showing an overlap of the sub-pixel patterns when three display sub-panels are superimposed on one another so that they are rotated and displaced in relation to one another in the surface direction.

### DETAILED DESCRIPTION OF THE PREFERRED EMBODIMENTS

With reference to the drawings, various embodiments of the displaying device according to the present invention will be described hereinafter.

### I. FIRST EMBODIMENT

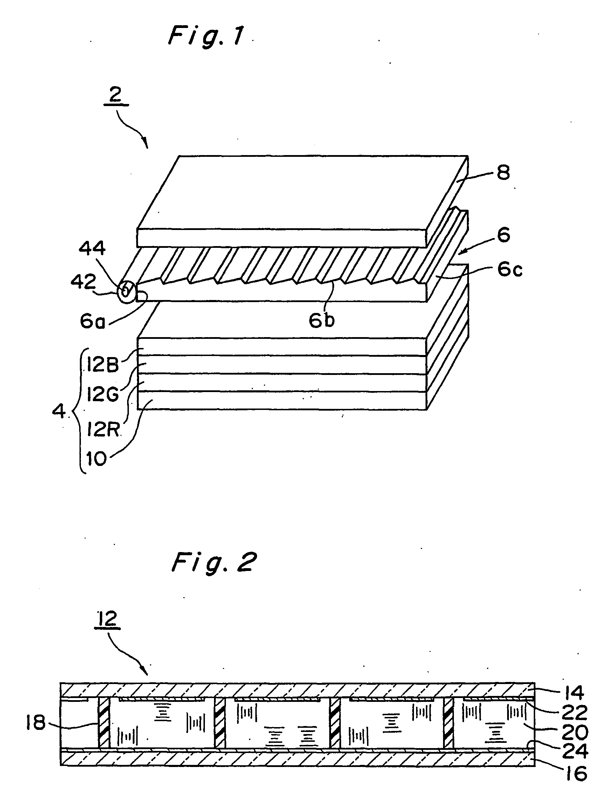

Referring to Fig. 1, a displaying device of the first embodiment according to the present invention, generally indicated by reference number 2, includes a front-lighting unit. The device 2 includes an LCD panel 4 and a light-conducting plate 6 located in front of the LCD panel 4 for projecting light toward the LCD panel 4. A touch panel 8 is provided in front of the light-conducting plate 6. These components 4, 6 and 8 are at their peripheries supported by and fixed to a frame not shown of the displaying device 2. Clearances are formed between the touch panel 8 and light-conducting plate 6 and between the light-conducting plate 6 and LCD panel 4. This allows a relatively large difference in refractive index between the light-conducting plate 6 and its neighboring layers (which are atmospheric layers and have a refractive index of 1), so that the panel 6 can conduct light more efficiently to improve the visibility of the device 2. The displaying device 2 further includes a control unit not shown for controlling the touch panel 8 and LCD panel 4.

The LCD panel 4 includes a light absorbing layer 10 and three "display sub-panels" 12 provided on the light absorbing layer 10. In the embodiment shown, red, green and blue display sub-panels 12R, 12G and 12B are positioned one on top the other and are deposited in this order on the light absorbing layer 10. The display sub-panels 12R, 12G and 12B have substantially identical structures.

More specifically, as shown in Fig. 2, each display sub-panel 12 includes a pair of transparent substrates, i.e., upper and lower substrates 14, 16, spaced apart from each other to form a predetermined gap therebetween. The substrates 14 and 16 are securely held by columns 18 extending in the thickness direction of the LCD panel 4. Preferably, the columns 18 are made of suitable resin. The display sub-panel 12 further includes liquid crystal (LC) 20 contained between the substrates 14 and 16. Also, to maintain the gap constant, spacers not shown are provided between the substrates 14 and 16, as known in the art.

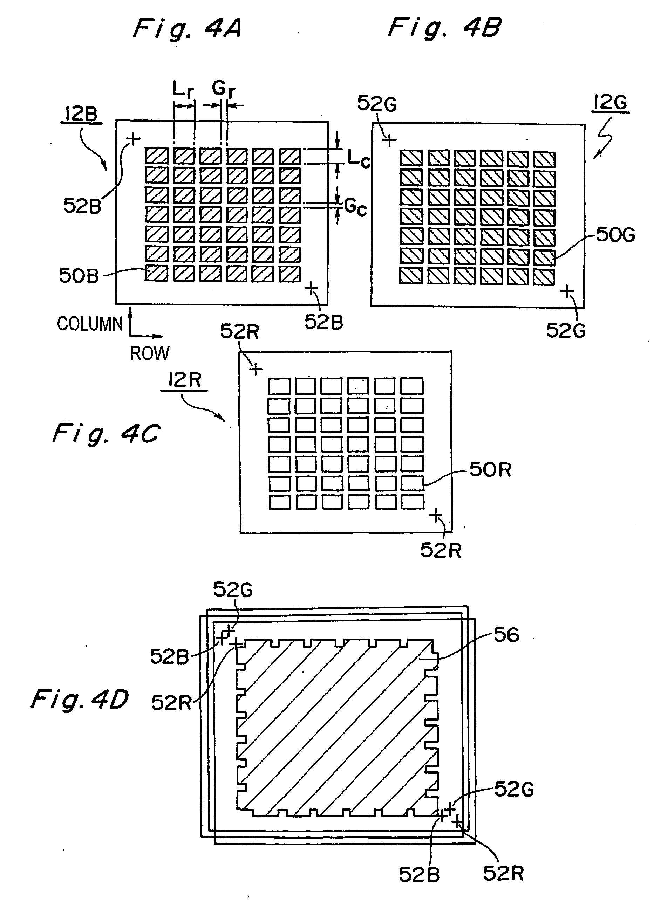

A plurality of transparent strip electrodes, i.e., column electrodes 22 arranged parallel to the direction extending across the front and rear surfaces of the drawing of Fig. 2 are provided on the lower surface of the upper substrate 14. Likewise, a plurality of transparent strip electrodes, i.e., row electrodes 24 arranged laterally in Fig. 2 (i.e. perpendicular to the longitudinal direction of the column electrodes 22) are provided on the upper surface of the lower substrate 16. The strip column and row electrodes 22 and 24 of each display sub-panel 12 cross each other at right angles to define a matrix of rectangular "sub-pixels" constituting pixels of the displaying device 2. As will be described in greater detail with reference to Fig. 4, the three display sub-panels 12 are superimposed on one another so that the sub-pixel patterns are displaced slightly in relation to one another in the surface direction of the display sub-panel. As will be described, this displacement can restrain moiré patterns from being produced.

The LCD panel may be formed by manufacturing each display sub-panel and then superimposing on one another. Alternatively, with respect to neighboring two display sub-panels, an upper substrate of a display sub-panel and an opposing lower substrate of the display sub-panel immediately above may be replaced by one substrate on both sides of which transparent electrodes are formed.

In this embodiment, the LC 20 of each display sub-panel 12 is a cholesteric LC capable of selectively reflecting visible light. More specifically, the cholesteric LCs in the red, green and blue display sub-panels 12R, 12G and 12B are capable of selectively reflecting red, green and blue light, respectively.

When a. suitable voltage is applied to the electrodes 22, 24, the cholesteric LC interposed between the electrodes 22 and 24 is switched between a reflective state where the cholesteric LC reflects visible light that is within a spectral bandwidth centered about a predetermined wavelength and a transmissive state where the cholesteric LC transmits the visible light. Therefore, when the LC domains at a sub-pixel defined by the specific column and row electrodes 22, 24 in a specific display sub-panel are switched to the reflective state and white light such as natural light is projected toward the LCD panel 4, the LC domains reflect visible light (e.g., red light), so that the corresponding color (e.g., red) is observed. On the other hand, when the LC domains at a sub-pixel in a specific display sub-panel are switched to the transmissive state, incident light is transmitted through the LC domains. Accordingly, by setting the LC domains at a sub-pixel constituting a pixel in a specific display sub-panel 12 in the reflective state and at the same time by setting the LC domains at the sub-pixels constituting the pixel in the other display sub-panel(s) 12 located in front of the specific display sub-panel 12 in the transmissive state, the color corresponding to the specific display sub-panel 12 is observed at the pixel. Also, by setting all the LC domains at sub-pixels constituting a pixel in the three display sub-panels 12 in the transmissive state, incident light is absorbed in the light absorbing layer 10, so that black color is observed at the pixel.

As cholesteric LC in each display sub-panel 12, a cholesteric LC that exhibits a cholesteric phase at room temperature or a nematic LC to which a chiral compound is added may be used. The cholesteric LC transforms to a "planar" state when it is applied with a relatively high-voltage pulse and to a "focal-conic" state by applying a relatively low-voltage pulse. When the cholesteric LC is applied with an intermediate voltage pulse, it transforms to an intermediate or "halftone color" state between the planar and the focal-conic states.

The cholesteric LC in the planar state reflects light that is within a spectral bandwidth centered about a wavelength λ=np, where n is the average refractive index of the LC and p is the pitch of a helical structure of the LC.

When the cholesteric LC reflects selectively light in the infrared spectrum, the cholesteric LC in the focal-conic state scatters visible light. However, when the cholesteric LC reflects selectively light having a shorter wavelength, the cholesteric LC in the focal-conic state scatters less visible light so that it can be transmitted through the cholesteric LC.

When the cholesteric LC is in the intermediate state, the halftone, color is displayed.

Thus, if the center wavelength is within a visible light spectrum and the LCD panel 4 is provided with a back plate such as absorbing layer 10 that absorbs a transmitted radiation, the cholesteric LC can selectively be switched between the planar state where a specific color corresponding to the wavelength is displayed, the focal-conic state where black color is displayed, and the intermediate state where halftone color is displayed.

With the displaying device 2 so constructed, by switching the LC domains at sub-pixels in each display sub-panel 12 constituting a pixel between the transmissive or reflective states, the pixel displays red, green, blue, white, cyan, magenta, yellow and black. For example, if the LC domains at sub-pixels constituting a pixel in the blue and green display sub-panels 12B, 12G are in the focal-conic or transmissive state and the LC domains at the sub-pixel constituting the pixel in the red display sub-panel 12R are in the planar or reflective state, the pixel displays red color. If the LC domains at a sub-pixel constituting a pixel in the blue display sub-panel 12B are in the focal-conic or transmissive state and the LC domains at sub-pixels constituting the pixel in the green and red display sub-panel 12G, 12R are in the planar or reflective state, the pixel displays yellow color.

Also, if the LC domains at sub-pixel(s) constituting a pixel in one or more display sub-panels 12 are in the intermediate state, the pixel displays any color.

As is well known to those in the art, these states, i.e., focal-conic, planar and intermediate states are maintained even if the voltage does not continue to be applied.

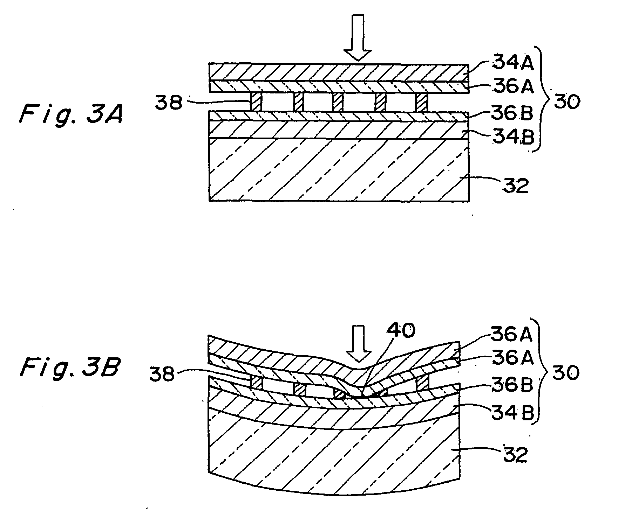

As shown in Fig. 3A, the touch panel 8, which is an analogue pressure-sensitive touch panel, includes a pressure-sensitive layer 30 and a resin base layer 32 bonded thereto that faces the light-conducting plate 6. For example, the base layer 32 is made of plastic. The base layer 32 serves to keep the touch panel 8 flat if light pressure is applied thereto. The pressure-sensitive layer 30 has a pair of upper and lower films 34A, 34B spaced apart from each other. A pair of upper and lower transparent conductive layers 36A and 36B, which are made of Indium Titanium Oxide for example, is formed on the lower surface of the upper films 34A and on the upper surface of the lower films 34B, respectively. To maintain the gap between the conductive layers 36A and 36B substantially constant, a plurality of spacers 38 are provided in the gap. The spacers 38 are arranged in a pattern (e.g. matrix) in the gap.

With the touch panel 8 so constructed, an external force (indicated by an arrow in Figs. 3A and 3B) is applied onto the upper film 34A, so that the upper conductive layer 36A is brought in touch with the lower conductive layer 36B. at a point 40. Thus, an electrical path is formed via the contact point 40, so that a voltage generated at the contact point 40 is measured by a position detection circuit not shown of the control unit to detect the position at which the layer 30 is pressed. If necessary, according to the detected position, a drive circuit not shown of the control unit applies predetermined voltages to a pair of specific electrodes 22, 24 on the upper and lower substrates 14, 16 (e.g., upper and lower electrodes that define pixels located below the contact point 40) so that the displaying state of the LC therebetween is changed.

Referring again to Fig. 1, a light source 44 is opposed to a peripheral surface 6a of the light-conducting plate 6. A reflector 42 is provided on the opposite side of the light source 44 with respect to the peripheral surface 6a of the panel 6. Accordingly, light emitted from the light source 44 enters the light-conducting plate 6 through the peripheral surface 6a. The light source 44 may be LEDs arranged adjacent to and along the peripheral surface 6a. A cold cathode tube may be used instead. As shown, the light-conducting plate 6 is designed to have a plurality of multifaceted microstructures disposed periodically along its front surface 6b from the peripheral surface 6a toward a peripheral surface 6c opposite the surface 6a, so that light emitted from the light source 44 is reflected with high efficiency by the front surface 6b to travel toward the LCD panel 4. The microstructures are arranged to form columns of two facets which run along the direction which is substantially parallel to the peripheral surfaces 6a and 6c. Herein, "periodical structure" refers to a structure of elements such as projections, electrodes or pixels that repeat themselves at regular or irregular intervals.

Referring to Figs. 4A-4D, the three display sub-panels 12B, 12G and 12R have identical sub-pixel patterns 50B, 50G and 50R in a form of matrix. Alignment marks 52B, 52G and 52R for ensuring accurate superimposition of the display sub-panels are formed thereon in the identical relation to the sub-pixel patterns 50B, 50G and 50R, respectively. The alignment marks 52B, 52G and 52R may be printed on the substrate(s) of the display sub-panels 12B, 12G and 12R, respectively. Alternatively, electrodes may be provided outside of the display region in the display sub-panel for displaying alignment marks, other than the displaying electrodes 22 and 24.

Where the display sub-panels 12B, 12G and 12R are superimposed on one another so that the positions of the alignment marks 52B, 52G and 52R coincide with one another, the periodical pixel pattern existing in the LCD panel may cooperate with a periodical pattern of the spacers 38 in the touch panel 8 or periodical pattern in the light-conducting plate 6 to produce moiré patterns. According to the present invention, the display sub-panels 12B, 12G and 12R are superimposed on one another for example by displacing the alignment marks 52G and 52R of the green and red display sub-panels 12G and 12R in the surface direction at a distance relative to the alignment marks 52B of the blue display sub-panel 12B. As a result, as shown in Fig. 4D, non-pixel regions where there are no sub-pixels of the display sub-panels when viewed in the thickness direction of the LCD panel are substantially eliminated in the whole display region of the LCD panel. Accordingly, any periodical patterns where pixel regions and non-pixel regions are arranged alternately are prevented from being produced. In Fig. 4D, reference number 56 indicates a zone where, in the superimposition of the display sub-panels 12B, 12G and 12R, at least one sub-pixel exists when viewed in the thickness direction of the LCD panel. Hereinafter, non-pixel regions are also referred to as dark regions.

To eliminate the dark regions, the display sub-panels 12B, 12G and 12R are displaced in relation to one another to such an extent that bleedings which may be produced by the displacement do not degrade the display quality. Preferably, the amount of displacement is designed so that the sub-pixels of the display sub-panels 12B, 12G and 12R that correspond to each pixel of the LCD panel overlap with one another when viewed in the thickness direction of the LCD panel.

Hereinafter, the horizontal and vertical directions in Fig. 4 are referred to as row and column directions, which correspond with the extending directions of the electrodes formed on the pair of substrates, respectively, of each display sub-panel. Where the display sub-panels having identical sub-pixel patterns are employed (in this case the width between the sub-pixels is typically set to be in the range of one hundredth to one tenth of the pitch of the sub-pixels.) and where the two (e.g. green and red) display sub-panels are displaced relative to the other (e.g. blue) display sub-panel, the degradation in display quality due to the relative displacement of the sub-pixels is allowable in case of 0.01Pr <|Δr|< 0.9Pr and 0.01Pc <|Δ c|<0.9Pc. Δr and Δc represent the displacements in the row and column directions, respectively. Pr and Pc represent the pitches of the sub-pixels in the row and column directions, respectively. It should be noted that although a displaying device in which the display sub-panels are superimposed on one another so that the sub-pixels are displaced in relation to one another beyond the above range causes bleedings to stand out, it has an advantage to eliminate periodical structures, which is included within the scope of the present invention.

As example, blue, green and red display sub-panels 12B, 12G and 12R described below were used to manufacture an LCD panel. Each sub-pixel had a size of 60 µm (row length Lr) × 50 µm (column length Lc). The row and column widths Gr and Gc between the adjacent sub-pixels were 6 µm and 5 µm (Pr=Lr+Gr, Pc=Lc+Gc). The display sub-panels 12B, 12G and 12R were superimposed on one another so that the alignment marks 52G were displaced by +6 µm (right) and +5 µm (up), in the row and column directions, respectively, and the alignment marks 52R by +12 µm (right) and -5 µm (down) in the row and column directions, respectively, in relation to the alignment marks 52B. The LCD panel so manufactured had no periodical pattern. The display sub-panels having the identical sub-pixel patterns allow the identical substrates to be used as substrates of each display sub-panel, which reduces the manufacturing cost of the display panel.

### II. SECOND EMBODIMENT

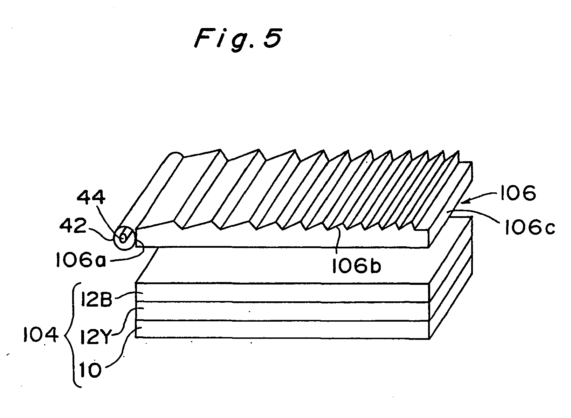

Referring to Fig. 5, a displaying device of the second embodiment according to the present invention will be described hereinafter. In this embodiment, the LCD panel 104 includes yellow and blue display sub-panels 12Y and 12B positioned one on top the other and deposited in this order on the light absorbing layer 10. The display sub-panels. 12Y and 12B have substantially identical structures. With the LCD panel 104 so designed, if the LC domains at sub-pixels constituting a pixel in the yellow and blue display sub-panels 12Y and 12B are in the reflective state, the pixel displays white. If the LC domains at sub-pixels constituting a pixel in the yellow and blue display sub-panel 12Y and 12B are in the transmissive state, the pixel displays black. As shown, the pitch of the microstructures formed on the front surface 106b of the light-conducting plate 106 is decreased in a given proportion with distance of the microstructures from the peripheral surface 106a, which permits the amount of light from the light-conducting plate 106 toward the LCD panel 104 to be substantially constant at any position of the light-conducting plate 106 irrespective of the distance from the light source 44.

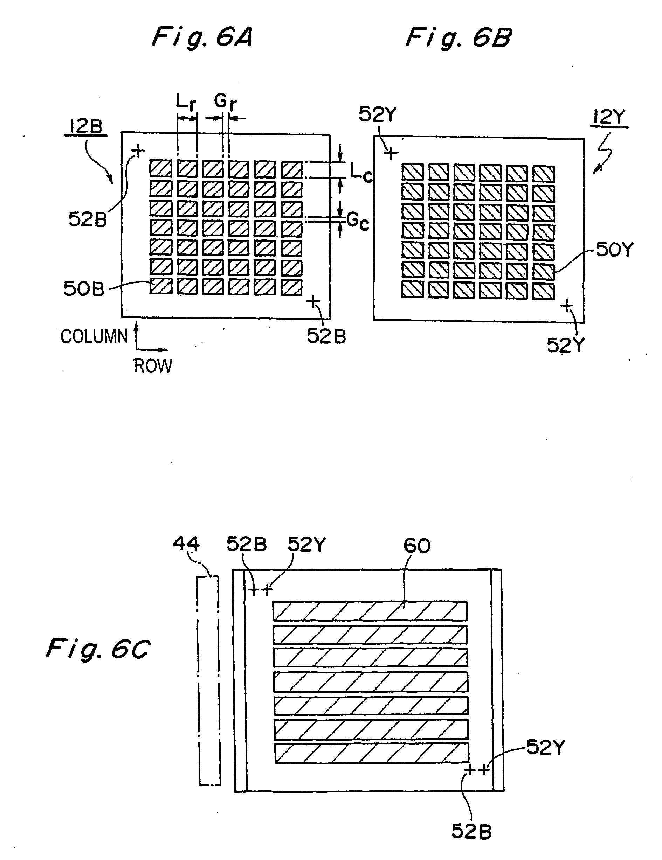

Referring to Figs. 6A-6C, the two display sub-panels 12B and 12Y have identical sub-pixel patterns 50B and 50Y in a form of matrix. Alignment marks 52B and 52Y for ensuring accurate superimposition of the display sub-panels are formed thereon in the identical relation to the sub-pixel patterns 508 and 50Y, respectively.

In this embodiment, the display sub-panels 12B and 12Y are superimposed on each other for example by displacing the alignment marks 52Y of the yellow display sub-panel 12Y relative to the alignment marks 52B of the blue display sub-panel 12B at a distance in the surface direction, which is parallel to the extending direction (horizontal direction in Fig. 6) of the electrodes formed on one substrate of the display sub-panel. As a result, as shown in Fig. 6C, when viewed in the thickness direction of the LCD panel, non-pixel regions (dark regions) which are perpendicular to the extending direction (i.e., vertical direction in Fig. 6) are substantially eliminated in the whole display region of the LCD panel. In Fig. 6C, reference number 60 indicates a zone where, in the superimposition of the display sub-panels 12B and 12Y, at least one sub-pixel exists when viewed in the thickness direction of the LCD panel.

To eliminate the dark regions, the display sub-panels 12B and 12Y are displaced in relation to each other to such an extent that bleedings which may be produced by the displacement do not degrade the display quality. Preferably, the amount of displacement is designed so that the sub-pixels of the display sub-panels 12B and 12Y that correspond to each pixel of the LCD panel overlap with each other when viewed in the thickness direction of the LCD panel.

Hereinafter, the horizontal and vertical directions in Fig. 6 are referred to as row and column directions, respectively. Where the display sub-panels having identical sub-pixel patterns are employed (in this case the width between the sub-pixels is typically set to be in the range of one hundredth to one tenth of the pitch of the sub-pixels.) and where one (e.g. yellow) display sub-panel is displaced relative to the other (e.g. blue) display sub-panel, the degradation in display quality due to the relative displacement of the sub-pixels is allowable in case of 0.01Pr < |Δr| < 0.9Pr or 0.01Pc < |Δc| < 0.9Pc. Δr and Δc represent the displacements in the row and column directions, respectively. Pr and Pc represent the pitches of the sub-pixels in the row and column directions, respectively. In the example shown, the display sub-panels are displaced in relation to each other along the row direction.

In a conventional LCD in which a light-conducting plate having a plurality of microstructures, the pitch of which is changed along its surface, is provided in front of an LCD panel, as shown in Fig. 5, moiré patterns may be produced where the pitch of the microstructures and the pitch of pixel pattern of the LCD panel substantially coincide with each other. In one possible solution, microstructures are configured so that the pitch of the microstructures and the pitch of pixel pattern of the LCD panel do not coincide with each other at any position of the light-conducting plate. However, this solution has a disadvantage that a different light-conducting plate must be prepared if an LCD panel has a different pitch of the pixel pattern.

According to the present invention, the light-conducting plate 106 and light source 44 are mounted above the LCD panel 104 so that the extending direction of the microstructures (which is substantially parallel with the that of the light source 44) on the front surface 106b of the panel 106 are substantially perpendicular to the extending direction of the dark regions between the adjacent sections of the zone 60. As a result, moiré patterns can be prevented from being produced or the contrast of moiré patterns, if any, can be reduced. In this latter respect, the zone 60 is composed of a first region where two sub-pixels exist and a second region where only one sub-pixel exists when viewed in the thickness direction. These first and second regions have different light transmittances. Thus, linear sections of a high light transmittance and linear sections of low light transmittance are alternately arranged from left to right in Fig. 6C, so that the periodical optical pattern may interfere with the periodical pattern in the light-conducting plate to produce moiré patterns. However, the contrast of the moiré patterns is so low that display quality is not degraded, compared to a conventional LCD device in which moiré patterns may be produced due to the difference in light transmittance between the pixel regions and non-pixel regions.

As example, blue and yellow display sub-panels 12B and 12Y described below were used to manufacture an LCD panel. Each sub-pixel had a size of 300µm (row length Lr) × 200 µm (column length Lc). The row and column widths Gr and Gc between the adjacent sub-pixels were 5 µm and 5 µm. The display sub-panels 12B and 12Y were superimposed on each other so that the alignment marks 52Y were displaced by +6 µm (right) in the row direction in relation to the alignment marks 52B. The LCD panel so manufactured had no periodical structure arranged from left to right in Fig. 6C.

### III. THIRD EMBODIMENT

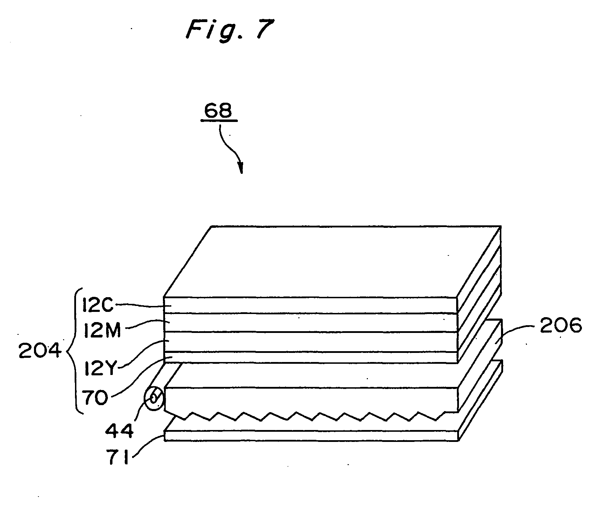

Referring to Fig. 7, a displaying device of the third embodiment according to the present invention, generally indicated by reference number 68, includes a back-lighting unit. In this embodiment, the light-conducting plate 206 is provided behind the LCD panel 204. The light-conducting plate 206 is designed to have a plurality of multifaceted microstructures disposed periodically along its rear surface, so that light emitted from the light source 44 is reflected with high efficiency by the rear surface to travel toward the LCD panel 204. To enhance the efficiency of reflection, a reflector 71 is preferably provided behind the light-conducting plate 206.

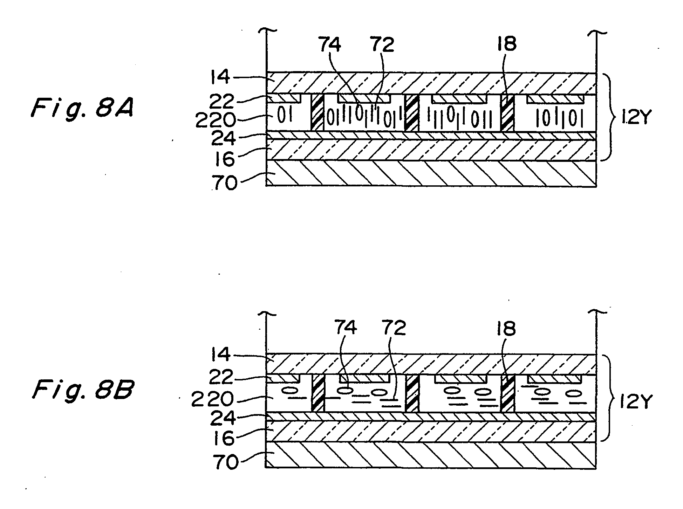

The LCD panel 204 includes yellow, magenta and cyan display sub-panels 12Y, 12M and 12C positioned one on top the other and deposited in this order on a polarizing plate 70. The LC 220 (Figs. 8A and 8B) of each display sub-panel 12 is guest-host LC. The light from the light-conducting plate 206 is directed through the plate 70 so that it is polarized parallel to the surface direction (horizontal direction in Figs. 8A and 8B) of the LCD panel 204.

With reference to Figs. 8A and 8B in which only the yellow display sub-panel 12Y is shown in detail, nematic LC is used as host LC 72. As guest LC, red-, green- and blue-colored dichroic dyes 74 are used for the cyan, magenta and yellow display sub-panels 12C, 12M and 12Y, respectively. The dye molecules are strongly absorbent to light that is polarized parallel to their principal axes, and strongly transmissive to light polarized perpendicular to their principal axes.

Each of the display sub-panels 12C, 12M and 12Y is constructed so that the nematic LC 72 and dichroic dye 74 are oriented perpendicular to the polarizing plate 70 as shown in Fig. 8A when no voltage is applied to the electrodes 22 and 24. In this state, the display sub-panels 12C, 12M and 12Y transmits light. On the other hand, when a suitable voltage is applied to the electrodes 22 and 24 in each of the display sub-panels 12C, 12M and 12Y, the nematic LC 72 and dichroic dye 74 are oriented parallel to the polarizing plate 70 as shown in Fig. 8B. In this state, the dichroic dyes 74 in the display sub-panels 12C, 12M and 12Y absorb light, so that complementary colors can be observed.

With the LCD panel 204 so constructed, by setting the LC domains at sub-pixels constituting a pixel in the magenta and yellow display sub-panels 12M, 12Y in the absorbent state and the LC domains at the sub-pixel constituting the pixel in the cyan display sub-panel 12C in the transmissive state, the pixel displays red color. By setting the LC domains at sub-pixels constituting a pixel in all the display sub-panels 12C, 12M and 12Y in the absorbent state, the pixel displays black. Likewise, by setting the LC domains at sub-pixels constituting a pixel in the display sub-panels 12C, 12M and 12Y in the absorbent or transmissive states, the pixel can display other colors.

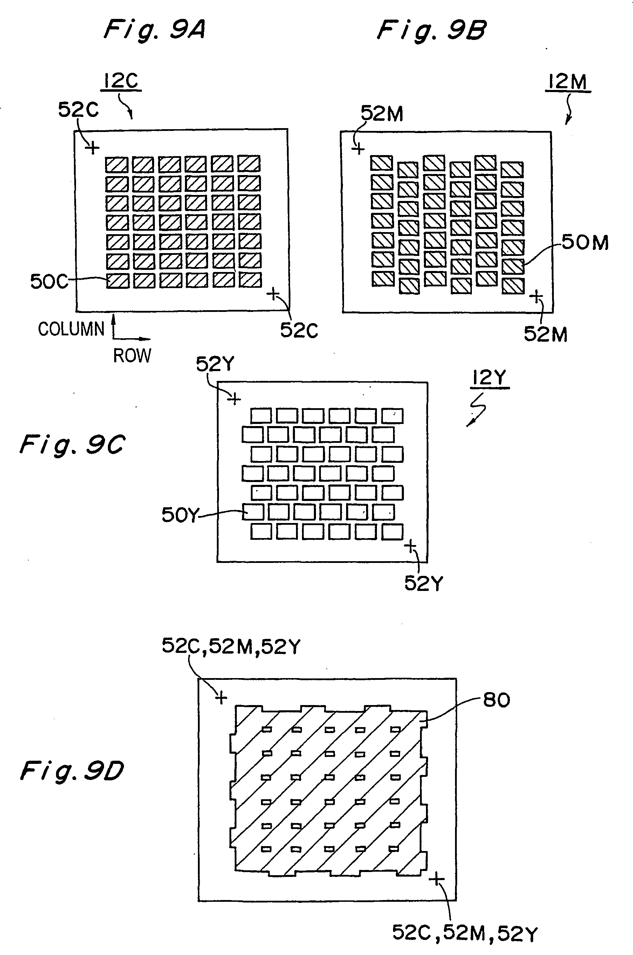

Referring to Figs. 9A-9D, alignment marks 52C, 52M and 52Y for ensuring accurate superimposition of the display sub-panels 12C, 12M and 12Y are formed thereon in the identical relation to the substrates of the display sub-panels 12C, 12M and 12Y, respectively. On the other hand, the three display sub-panels 12C, 12M and 12Y have different sub-pixel patterns 50C, 50M and 50Y, not forming part of the invention as claimed. As shown in Fig. 9A, the sub-pixel pattern 50C of the cyan display sub-panel 12C is in a form of matrix. Hereinafter, the horizontal and vertical directions in Figs. 9A-9C are referred to as row and column directions, respectively. As shown in Fig. 9B, the sub-pixel pattern 50M of the magenta display sub-panel 12M is in a staggered shape formed by displacing sub-pixels in every other column of the matrix sub-pixel pattern identical to that of the cyan display sub-panel 12C in the downward direction. As shown in Fig. 9C, the sub-pixel pattern 50Y of the yellow display sub-panel 12Y is in a staggered shape formed by displacing sub-pixels in every other row of the matrix sub-pixel pattern identical to that of the cyan display sub-panel 12C in the right direction.

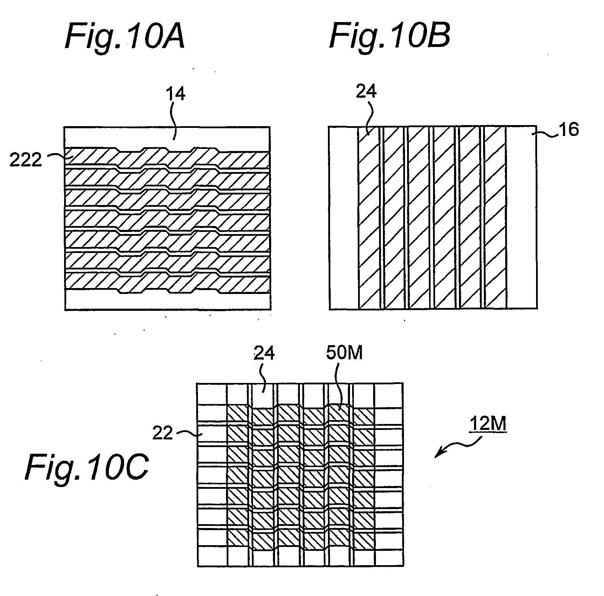

With reference to Figs. 10A-10C, the sub-pixel pattern 50M of the magenta display sub-panel 12M may be formed for example by employing partially angled electrodes 222 on one of the upper and lower substrates 14, 16 (e.g. upper substrate 14). By superimposing these upper and lower substrates 14 and 16 on each other, the sub-pixel pattern 50M of the magenta display sub-panel 12M can be designed so that adjacent sub-pixel columns are displaced in relation to each other in the column direction as shown in Fig. 10C. The sub-pixel pattern 50Y of the yellow display sub-panel 12Y can be designed in a similar manner.

Where the display sub-panels 12C, 12M and 12Y are superimposed on one another so that the alignment marks 52C, 52M and 52Y coincide with one another, there may be a small number of non-pixel regions (dark regions) (which may cause periodical structures) in the whole display region of the LCD panel, as shown in Fig. 9D. In Fig. 9D, reference number 80 indicates a zone where, in the superimposition of the display sub-panels 12C, 12M and 12Y, at least one sub-pixel exists when viewed in the thickness direction of the LCD panel.

As described above, in the back lit transmissive LCD 68, the light-conducting plate 206 reflects light from the light source 44 at the microstructures on the rear surface thereof toward the LCD panel 204. Since the microstructures are composed of columns arranged at intervals, the light-conducting plate 206 serves as a plurality of separate secondary light sources, which may produce luminance ununiformity of illumination from the light-conducting plate 206 toward the LCD panel 204. As a result, where an LCD panel has a periodical pixel pattern as in case of a conventional back lit transmissive LCD, interference fringes may be produced.

According to the embodiment of the present invention, the slight displacement of the sub-pixels of the display sub-panels in the surface direction allows the number of periodical pixel patterns in the LCD panel to be as small as possible, restraining the interference fringes from being produced. Although it is desirable to eliminate the periodical structure of the pixel pattern, substantially no interference fringes can be produced or the contrast of the interference fringes, if any, can be low if a small number of periodical pixel patterns are produced as in Fig. 9D. The reason is as follows: In a front lit reflective LCD, a light/dark pattern corresponding to the pixel pattern and a light/dark pattern produced by microstructures of a light-conducting plate provided in front of the LCD panel may produce interference fringes or moiré patterns. On the other hand, in a back lit transmissive LCD, a light/dark pattern corresponding to the pixel pattern interferes with a light/dark pattern produced by light projected from a light-conducting plate. The contrast of the latter is lower than the contrast produced by the microstructures of the light-conducting plate in case of the front lit reflective LCD.

In a back lit LCD, the sub-pixels of the display sub-panels may be displaced in a similar manner described in the first embodiment in which identical sub-pixels are displaced in relation to one another. Note that in the first or second embodiments the different sub-pixel patterns of the display sub-panels may be used to displace the display sub-panels in relation to one another as in this embodiment.

### IV. FOURTH EMBODIMENT

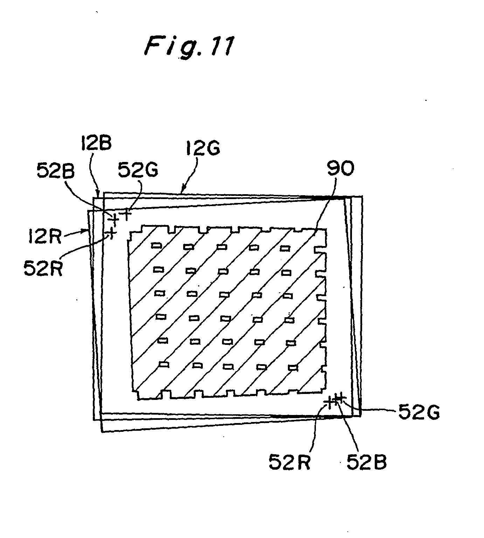

In the first and second embodiments the display sub-panels are displaced in parallel relation to one another in the surface direction in order to eliminate the periodical pixel pattern or make it indistinctive. Alternatively or in addition, the display sub-panels may be rotated relative to one another. The display sub-panels are displaced in relation to one another to such an extent that bleedings which may be produced by the displacement do not degrade the display quality. Fig. 11 shows an overlap of the sub-pixel patterns when the three display sub-panels 12B, 12G and 12R are superimposed on one.another so that they are displaced in rotational relation to one another in the surface direction. In the drawing, reference number 90 indicates a zone where, in the superimposition of the display sub-panels 12B, 12G and 12R, at least one sub-pixel exists when viewed in the thickness direction of the LCD panel. The three display sub-panels 12B, 12G and 12R have identical sub-pixel patterns. The alignment marks 52B, 52G and 52R are formed on the display sub-panels 12B, 12G and 12R in the identical relation to their sub-pixel patterns, respectively. In the example shown, a small number of periodical structures are left after the superimposition, which may produce moiré patterns. However, the contrast of the moiré patterns is so low that display quality is not degraded. It may be possible to eliminate the periodical structure by further displacing the display sub-panels 12B, 12G and 12R in parallel relation to one another at a distance in the surface direction. Note that in the third embodiment the display sub-panels may be displaced in rotational relation to one another.

### V. OTHERS

Although the present invention has been described by way of examples with reference to the accompanying drawings, further changes and modifications can be made without departing from the spirit and scope of the inventions. For example, a digital pressure-sensitive touch panel in which electrodes are arranged in a form of matrix may be used instead of the analogue pressure-sensitive touch panel described above.

Also, as display sub-panels constituting the display panel of the present invention, organic electroluminescent (EL) elements having different radiation wavelengths may be used instead.of liquid crystal elements. Typically, the organic EL element includes an EL material interposed between a pair of substrates. A plurality of electrodes are provided on each substrate so that the electrodes on one substrate and the electrodes on the other cross each other at right angles. Therefore, the organic EL element has a periodical structure, so that moiré patterns may be produced if a touch panel is provided in front of the organic EL element. Note that a light-conducting plate is not required since the organic EL element is a luminescent display element. The relative displacement of the sub-pixel patterns of the organic EL elements in the surface direction in a similar manner described above can restrain moiré patterns from being produced or reduce the contrast of the moiré patterns, if any, to such a degree that the display quality is not degraded.

Further, as display sub-panels constituting the display panel of the present invention, any non-luminescent display elements other than liquid crystal elements may be employed.

Moreover, and not forming part of the invention as claimed, the sub-pixels may be displaced in relation to one other in the surface direction by employing display sub-panels each having a different size of subpixels.

In addition, the present invention may be applicable to a display element which includes a plurality of electrodes in a form of matrix and a solid electrode opposite the plurality of electrodes and which is driven by a drive technique using a switching element such as TFT (Thin Film Transistor), other than a display element described above which is driven by a passive matrix drive technique.

According to the present invention, a plurality of display sub-panels constituting a display panel are superimposed on one another so that sub-pixels of the display sub-panels do not coincide with one another when viewed in the thickness direction of the display panel. Accordingly, where a flat optical element such as light-conducting plate and/or touch panel is provided on the display panel, moiré patterns are restrained from being produced, resulting in a display of high visibility. Also, a flat optical element such as light-conducting plate or touch panel needs not be prepared according to the construction of the display panel in order that moiré patterns may not be produced. That allows a broader choice in the construction and/or types of the optical elements that are used with the display panel.

## Claims

1. A display panel (4) including first and second display sub-panels (12B, 12G, 12R) superimposed on each other,
wherein each of a plurality of pixels of the display panel is constituted by a first sub-pixel (50B, 50G, 50R) of the first display sub-panel and a second sub-pixel (50B, 50G, 50R) of the second display sub-panel; and
wherein the first and second display sub-panels are superimposed on each other so that the first and second sub-pixels constituting each pixel of the ones of the plurality of pixels are partially displaced at a distance in relation to each other in a surface direction of the display sub-panel;
**characterized in that**
the first and second sub-pixels constituting each pixel of the display panel are displaced in relation to each other so that they overlap with each other when viewed in the direction perpendicular to said surface direction; and
wherein the pattern of the first sub-pixels and the pattern of the second sub-pixels are identical.

2. The display panel in accordance with claim 1, wherein said patterns are in a form of matrix.

3. The display panel in accordance with claim 2, wherein the first and second display sub-panels are superimposed on each other so that the pattern of the first sub-pixels and the pattern of the second sub-pixels are displaced in relation to each other in at least a row or column direction of said matrix.

4. The display panel in accordance with claim 3, wherein 0.01Pr < | Δr | < 0.9Pr or 0.01Pc < | Δc | 0.9Pc is satisfied, wherein Δr and Δc represent the displacements in the row and column directions, respectively, and Pr and Pc represent the pitches of the sub-pixels in the row and column directions, respectively.

5. The display panel in accordance with claim 1, wherein the first and second display sub-panels have first and second alignment marks (52B, 52G, 52R), respectively; and
wherein the first and second display sub-panels are superimposed on each other so that the first and second alignment marks coincide with each other when viewed in the direction perpendicular to said surface direction.

6. The display panel in accordance with claim 1, wherein the first and second display sub-panels have first and second alignment marks positioned in identical relation to the first and second sub-pixel patterns, respectively; and
wherein the first and second display sub-panels are superimposed on each other so that the first and second alignment marks are displaced at said distance in relation to each other in said surface direction.

7. The display panel in accordance with claim 1, wherein the first and second sub-panels are liquid crystal (20) elements.

8. A display apparatus (2) comprising a display panel in accordance with one of the claims 1 to 7, wherein the display panel has a major surface which includes said first and second display sub-panels; and further being provided with a flat optical element (6, 8) opposed to said major surface of the display panel.

9. The display apparatus in accordance with claim 8, wherein said flat optical element is a touch panel (8).

10. The display apparatus in accordance with claim 8, wherein said flat optical element is a light-conducting plate (6).

## Patentansprüche

1. Anzeigefeld (4) mit einem ersten und einem zweiten Anzeige-Subfeld (12B, 12G, 12R), die übereinandergelegt sind, wobei jedes von einer Vielzahl von Pixeln des Anzeigefelds durch ein erstes Sub-Pixel (50B, 50G, 50R) des ersten Anzeige-Subfelds und ein zweites Sub-Pixel (50B, 50G, 50R) des zweiten Anzeige-Subfelds gebildet ist; und
wobei das erste und das zweite Anzeige-Subfeld so übereinandergelegt sind, dass die ersten und zweiten Sub-Pixel, die jedes Pixel von denjenigen der Vielzahl von Pixeln bilden, partiell um eine Entfernung in Bezug auf einander, in einer Oberflächenrichtung des Anzeige-Subfelds, verschoben sind;
**dadurch gekennzeichnet, dass**
die ersten und zweiten Sub-Pixel, die jedes Pixel des Anzeigefelds bilden, so in Bezug auf einander verschoben sind, dass sie einander, im Blick in der Richtung senkrecht zu der Oberflächenrichtung, überlappen; und
wobei das Muster der ersten Sub-Pixel und das Muster der zweiten Sub-Pixel identisch sind.

2. Anzeigefeld gemäß Anspruch 1, bei dem die Muster in einer Matrixform sind.

3. Anzeigefeld gemäß Anspruch 2, bei dem das erste und das zweite Anzeige-Subfeld so übereinandergelegt sind, dass das Muster der ersten Sub-Pixel und das Muster der zweiten Sub-Pixel in Bezug auf einander, in zumindest einer Reihen- oder Spaltenrichtung der Matrix, verschoben sind.

4. Anzeigefeld gemäß Anspruch 3, bei dem 0,01Pr < |Δr| < 0,9 Pr oder 0,01 Pc < |Δc| < 0,9Pc erfüllt ist, wobei Δr und Δc die Verschiebungen in der Reihen- beziehungsweise Spaltenrichtung darstellen, und Pr und Pc den Abstand der Sub-Pixel in der Reihen- beziehungsweise Spaltenrichtung darstellen.

5. Anzeigefeld gemäß Anspruch 1, bei dem das erste und das zweite Anzeige-Subfeld erste beziehungsweise zweite Ausrichtungsmarkierungen (52B, 52G, 52R) aufweisen; und
wobei das erste und das zweite Anzeige-Subfeld so übereinandergelegt sind, dass die ersten und zweiten Ausrichtungsmarkierungen, im Blick in der Richtung senkrecht zu der Oberflächenrichtung, miteinander zusammenfallen.

6. Anzeigefeld gemäß Anspruch 1, bei dem das erste und das zweite Anzeige-Subfeld erste und zweite Ausrichtungsmarkierungen aufweisen, die in einer identischen Beziehung zu den ersten beziehungsweise den zweiten Sub-Pixelmustern positioniert sind; und
wobei das erste und das zweite Anzeige-Subfeld so übereinandergelegt sind, dass die ersten und zweiten Ausrichtungsmarkierungen, um die Entfernung in Bezug auf einander in der Oberflächenrichtung, verschoben sind.

7. Anzeigefeld gemäß Anspruch 1, bei dem das erste und das zweite Subfeld Flüssigkristall-Elemente (20) sind.

8. Anzeigevorrichtung (2) mit einem Anzeigefeld gemäß einem der Ansprüche 1 bis 7, bei der das Anzeigefeld eine Hauptoberfläche aufweist, welche das erste und das zweite Anzeige-Subfeld umfasst; und wobei sie ferner mit einem flachen optischen Element (6, 8) versehen ist, das der Hauptoberfläche des Anzeigefelds gegenüberliegt.

9. Anzeigevorrichtung gemäß Anspruch 8, bei der das flache optische Element ein Bildschirm-Tastfeld (8) ist.

10. Anzeigevorrichtung gemäß Anspruch 8, bei der das flache optische Element eine Lichtleitplatte (6) ist.

## Revendications

1. Panneau d'affichage (4) comprenant des premier et second sous-panneaux d'affichage (12B, 12G, 12R) superposés l'un sur l'autre, dans lequel chacun d'une pluralité de pixels du panneau d'affichage est constitué d'un premier sous-pixel (50B, 50G, 50R) du premier sous-panneau d'affichage et d'un second sous-pixel (50B, 50G, 50R) du second sous-panneau d'affichage ; et
dans lequel les premier et second sous-panneaux d'affichage sont superposés l'un sur l'autre, de sorte que les premier et second sous-pixels constituant chaque pixel des pixels de la pluralité de pixels sont partiellement déplacés à une distance l'un par rapport à l'autre dans une direction de surface du sous-panneau d'affichage ;
**caractérisé en ce que**
les premier et second sous-pixels constituant chaque pixel du panneau d'affichage sont déplacés l'un par rapport à l'autre, de sorte qu'ils se chevauchent entre eux lorsqu'ils sont vus dans la direction perpendiculaire à ladite direction de surface ; et
dans lequel le motif des premiers sous-pixels et le motif des seconds sous-pixels sont identiques.

2. Panneau d'affichage selon la revendication 1, dans lequel lesdits motifs sont sous forme de matrice.

3. Panneau d'affichage selon la revendication 2, dans lequel les premier et second sous-panneaux d'affichage sont superposés l'un sur l'autre, de sorte que le motif des premiers sous-pixels et le motif des seconds sous-pixels sont déplacés l'un par rapport à l'autre dans au moins une direction de rangée ou de colonne de ladite matrice.

4. Panneau d'affichage selon la revendication 3, dans lequel 0,01Pr <| Δr |< 0,9Pr ou 0,01Pc < | Δc | 0,9Pc est satisfait lorsque Δr et Δc représentent les déplacements dans les directions de rangées de colonnes, respectivement, et Pr et Pc représentent les pas des sous-pixels dans les directions de rangées et de colonnes, respectivement.

5. Panneau d'affichage selon la revendication 1, dans lequel les premier et second sous-panneaux d'affichage ont des première et seconde marques d'alignement (52B, 52G, 52R), respectivement ; et
dans lequel les premier et second sous-panneaux sont superposés, de sorte que les première et seconde marques d'alignement coïncident entre elles lorsqu'elles sont vues dans la direction perpendiculaire à ladite direction de surface.

6. Panneau d'affichage selon la revendication 1, dans lequel les premier et second sous-panneaux d'affichage ont des première et seconde marques d'alignement positionnées en relation identique par rapport aux première et seconde configurations de sous-pixels, respectivement ; et
dans lequel les premier et second sous-panneaux d'affichage sont superposés, de sorte que les première et seconde marques d'alignement sont déplacées à ladite distance l'une par rapport à l'autre dans ladite direction de surface.

7. Panneau d'affichage selon la revendication 1, dans lequel les premier et second sous-panneaux sont des éléments à cristaux liquides (20).

8. Appareil d'affichage (2) comprenant un panneau d'affichage selon l'une des revendications 1 à 7, dans lequel le panneau d'affichage présente une surface principale qui comprend lesdits premier et second sous-panneaux d'affichage ; et étant de plus doté d'un premier élément optique plat (6, 8) opposé à ladite surface principale du panneau d'affichage.

9. Appareil d'affichage selon la revendication 8, dans lequel ledit élément optique plat est un panneau tactile (8).

10. Appareil d'affichage selon la revendication 8, dans lequel ledit élément optique plat est une plaque conductrice de lumière (6).
